# EUROPEAN PATENT APPLICATION

(11) **EP 1 848 085 A2**
(43) Date of publication of application: **24.10.2007**
(21) Application number: 07106558.5
(22) Date of filing: 20.04.2007
(51) Int. Cl.: H02J 3/38

(54) **Modular bidirectional bus system for exchanging energy between modules**

(30) Priority: 20.04.2006 NL 1031646
(71) Applicant: N.V. Nederlandsche Apparatenfabriek NEDAP, 7141 DC Groenlo (NL)
(72) Inventor: Norder, Rudolf Jan, D-48683, Ottenstein (DE)
(74) Representative: van Loon, C.J.J.

(57) **Abstract**

A modular bidirectional bus system for exchanging energy between modules. The system is provided with at least one bus and a plurality of exchangeable modules which are detachably connected with the bus for mutually exchanging electric energy between the modules via the bus. The system is arranged such that the modules operatively generate a voltage on the bus which is within a predetermined voltage interval.

## Description

The invention relates to a system for exchanging energy. In the market of electric energy supply, a stepwise shift occurs from centralized thinking to decentralized thinking, in which distributed power generation and distributed power storage play a key role. The exploitation of hydrogen can also be considered in the same development where small units will become available to the market to the level of the smallest user. This also holds for wind and solar energy. In addition, it is a fact that, in a number of cases, storing power can result in economic advantages which are worth considering.

The invention contemplates providing a system which can support at least a number of the above-mentioned objects and such that the system can be built up flexibly and adjusted to the desires of a user.

The invention relates to a modular bidirectional bus system for exchanging energy between modules, provided with at least a bus and a plurality of exchangeable modules which are detachably connected with the bus for mutually exchanging electric energy between the modules via the bus, while the system is provided with at least two different modules of the following types:
- a first type of module with at least one first connection which is operatively electrically connected with the bus for supplying energy to the bus via the first connection of the first type of module and at least one second connection which is operatively connected with a first type of apparatus for drawing energy from the first type of apparatus via the second connection of the first type of module;
- a second type of module with at least one first connection which is operatively electrically connected with the bus for drawing energy from the bus via the first connection of the second type of module and with at least one second connection which is operatively connected with a second type of apparatus for supplying energy to the second type of apparatus via the second connection of the second type of module;
- a third type of module with at least one first connection which is operatively electrically connected with the bus and a second connection which is operatively connected with a third type of apparatus for, as desired, supplying energy to the bus via the first connection of the third type of module or drawing energy from the third type of apparatus via the second connection of the third type of module or drawing energy from the bus via the first connection of the third type of module and supplying energy to the third type of apparatus via the second connection of the third type of module, while the system is arranged such that the modules operatively generate a predetermined voltage on the bus.

Because the bus system has a modular structure, it can completely be arranged as desired. This is because the modules are detachably connected with the bus system. Because the system comprises at least two different types of modules, the system can, on the one hand, take up energy supplied from different first types or third types of apparatuses via first types of and/or third types of modules and, on the other hand, deliver this energy to different other second or third types of apparatuses via the second types and/or third types of modules. Because the system is arranged such that the modules operatively generate a predetermined voltage on the bus, the system can be used for different first types, second types and third types of apparatuses.

In particular, it holds that the predetermined voltage is a DC voltage.

It further holds, for instance, that a first type of apparatus connected with the system comprises a fuel cell delivering a DC voltage. In that case, the system comprises, for instance, a module of the first (or third) type arranged to draw energy from the fuel cell and to offer this energy with this DC voltage to the bus. To this end, the respective module is provided with a DC/DC converter.

It further holds, for instance, that a second type of apparatus connected with the system comprises an AC local electricity grid of a house or a building. In that case it holds, for instance, that the system is at least provided with a module of the second (or third) type which is connected with the second apparatus, which second module is provided with a DC/AC converter in order to convert the DC voltage of the bus to an AC voltage for the benefit of the local electricity grid of the house or building.

In particular, it holds that a third type of apparatus connected with the system is an apparatus for storing and delivering energy such as a supercap. The system is then, for instance, provided with a third type of module which is operatively connected with the third type of apparatus. A third type of module, in case it is coupled with a supercap, is again, to this end, provided with at least one DC/DC converter.

The system is preferably further provided with a control device which can activate or deactivate any type of module for delivering energy via the first connection and taking up energy via a second connection or for taking up energy via the first connection and delivering energy via the second connection. If, for instance, the fuel cell generates energy, this can be supplied to the bus via a first type of module. This energy can then be stored in the battery or supercap via a third type of module. To this end, the first type of module converts the voltage generated by the fuel cell to the predetermined voltage on the bus. When the local AC grid then starts to use energy which is connected with the bus via a second type of module, energy will be drawn from the bus via the second type of module. Depending on the control by the control device, this energy may be drawn from the fuel cell directly via the first module and/or be drawn via the third module of the supercap or battery.

A user may, for instance, control the control device such that the energy needed is only drawn from the supercap. Also, a user may indicate that he, conversely, does not wish this and that the energy needed is drawn from the fuel cell.

Because the system is arranged such that the modules operatively generate a predetermined voltage on the bus, other modules can easily be added to the system. Thus, a second module of the third type can be added, which module is, on the one hand, coupled with the bus and, on the other hand, coupled with a public electricity grid. To this end, this module is provided with an AC/DC converter. In this manner, for instance, when the fuel cell does not generate energy and/or the supercap is not charged with energy, the local electricity grid can draw energy from the bus via a module of the second type, which energy is delivered by the second module of the third type which is connected with the public electricity grid. In other words, energy is drawn from the public electricity grid. It is even conceivable that, at any moment, the control device brings about that energy generated by the fuel cell and supplied to the bus is supplied to the public electricity grid via the second module of the third type if, for instance, the price of electric energy per kilowatt/hour is relatively high. If the price is relatively low, the control device can bring about that the energy of the fuel cell is supplied to the supercap. This energy which is supplied to the supercap can, at any moment, be supplied to the local electricity grid via a first module of the third type and a module of the second type to meet a present energy need. On the other hand, it is conceivable that the energy stored in the supercap is, at any moment, supplied to the public electricity grid via a first module of the third type and a second module of the third type when the price of electric energy is relatively high. Thus, a user can buy energy inexpensively, store it and optionally sell it at a later time. Such possibilities are made possible by the modular bidirectional bus system according to the invention. Because the system is arranged such that the modules generate a predetermined voltage on the bus, the modular bidirectional bus system can be added to in a simple manner and arranged according to the specific wishes of a user of the system.

In particular, it holds that the modules are, in combination, arranged such that a predetermined voltage is operatively generated on the bus. Such a system has the advantage that, in fact, the modules themselves ensure that the predetermined voltage is generated. Therefore, it is preferred that the modules themselves generate the predetermined voltage depending on supply and/or drawing of energy with a module.

Here, it holds that, according to a special embodiment according to the invention, the modules are, in combination, arranged such that a voltage is operatively received on the bus which is within a predetermined voltage interval. So, in this manner, the modules themselves generate and regulate the voltage on the bus depending on the charge of the modules. In this regulation, a third type of module is seen as a special variant of a first type of module.

The invention will now be explained in more detail with reference to the drawing, in which:
Fig. 1 shows a first possible embodiment of a system according to the invention; and
Fig. 2 shows a second possible embodiment of a system according to the invention.

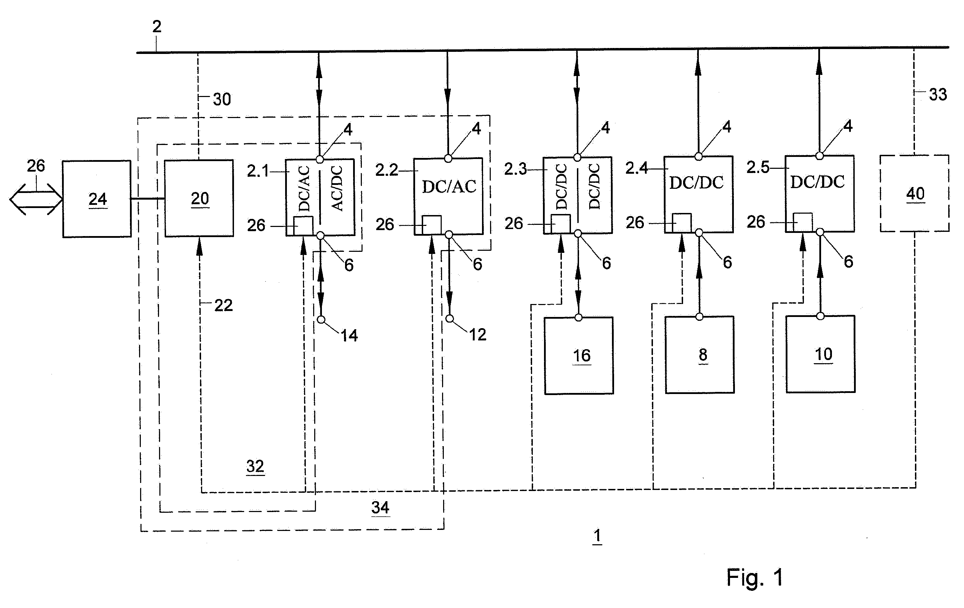

In Fig. 1, reference numeral 1 designates a modular bidirectional bus system according to the invention.

The system is provided with at least one bus 2 and a plurality of exchangeable modules 2.i (in this example, i=1,2,..,5) which are detachably connected with the bus 2 for mutually exchanging electric energy between the modules via the bus. In this example, the modules 2.4 and 2.5 are each a first type of module. Each first type of module has at least one first connection 4 which is, as shown in this example, operatively electrically connected with the bus 2 for supplying energy to the bus via the first connection of the first type of module. Each first type of module is further provided with a second connection 6 which is operatively connected with a first type of apparatus 8,10 for drawing energy from the first types of apparatuses 8,10, respectively, via the second connection 6. In this example, the apparatus 8 is a solar cell and, in this example, the apparatus 10 is a windmill. It will be clear that both the solar cell 8 and the windmill 10 can generate electric energy and deliver this to the respective modules 2.4 and 2.5 which can, in turn, deliver this energy to the bus 2.

The system is further provided with one module 2.2 which is a second type of module. Each second type of module, such as the module 2.2, is provided with a first connection 4 which is, as shown in this example, operatively electrically connected with the bus 2 for drawing energy from the bus via the first connection 4. Further, each second type of module, such as the module 2.2, is provided with a second connection 6 which is operatively connected with a second type of apparatus 12 for supplying energy to the second type of apparatus 12 via the second connection 6 of the second type of module. In this example, the second type of apparatus 12 consists of a local AC electricity grid of a building or a house.

In this example, the system is further provided with two modules 2.1 and 2.3 which are each a third type of module. Each third type of module, such as the modules 2.1 and 2.3, is provided with a first connection 4 which is, as shown in this example, operatively electrically connected with the bus 2 and a second connection 6 which is operatively connected with a third type of apparatus, in this example the apparatuses 14,16, for, as desired, supplying energy to the bus via the first connection 4 of the third type of module and drawing energy from the third type of apparatus via the second connection 6 of the third type of module or drawing energy from the bus via the first connection 4 of the third type of module and supplying energy to the third type of apparatus via the second connection 6 of the third type of module.

In this example, the apparatus 14 consists of the public electricity grid and the apparatus 16 of a supercap.

The system is, as will be explained herein in more detail, arranged such that the modules 2.1 operatively generate a predetermined voltage on the bus. In this example, this is a DC voltage.

Because the public electricity grid 14 is powered by an AC voltage while, in this example, a DC voltage is present on the bus 2, the first module 2.1 is provided with a DC/AC and an AC/DC converter. Because the local AC electricity grid is also powered by an AC voltage, the module 2.2 is also provided with a DC/AC converter. In this example, the supercap 16 (this is a type of battery) is powered by a DC voltage, which is the reason why the module 2.3 is provided with at least one DC/DC converter (in this example a first DC/DC converter for charging the supercap with energy from the bus and a second DC/DC converter for supplying energy from the supercap to the bus). The solar panel 8 and the windmill 10 are also each powered by a DC voltage, which is the reason why each of the modules 2.4 and 2.5 is provided with a DC/DC converter.

In this example, the system is further provided with a control device 20 which can control each first type of module (in this example the modules 2.4 and 2.5), such as activate or deactivate it for delivering energy via the first connection and drawing energy via the second connection. In this example, the control device 20 can also activate or deactivate each second type of module (module 2.2) for taking up energy via the first connection and delivering energy via the second connection of the second type of module. Further, the control device 20 can activate or deactivate each third type of module (in this example the modules 2.1 and 2.3) for, as desired: delivering energy via the first connection and taking up energy via the second connection; or taking up energy via the first connection and delivering energy via the second connection.

In this example, the control device 20 generates control signals on a line 22 connecting the control device 20 with each of the modules 2.i for the above-mentioned activation and deactivation of the modules. In this example, the system is further provided with a computer 24 which is connected with the control device 20. Via the line 22, further, information from each module can be supplied to the control device 20. Each module is further provided with a local control unit 26 which is connected with the control unit 20. The apparatus described up to this point operates as follows.

Suppose that energy is generated using the solar cell 8. This energy is supplied to the second type of module 2.4 with a DC voltage of, for instance, 100 volt. The local control unit 26 of the module 2.4 can communicate this via the line 22 to the control device 20 which, in response thereto, controls the module 2.4 so that it will deliver energy to the bus 2. The second type of module 2.4 converts the DC voltage to a DC voltage of about 400 volt and then, for instance, ensures that, on the bus 2, a predetermined DC voltage of, in this example, about 400 volt is generated. As said, the local control unit 26 of the module 2.4 communicates to the control device 20 that energy is offered to the module 2.4. In response thereto, the control device 20 may, for instance, control the module 2.3 for drawing energy from the bus and supplying energy to the supercap 16. In that case, the module 2.3 will convert the DC voltage on the first connection 4 of about 400 volt to a DC voltage of about 50 volt and supply this to the supercap 16 via the connection 6. So, the energy supplied to the bus via the module 2.4 is then supplied to the supercap 16 via the module 2.3. In this example, the supercap 16 is charged with a DC voltage of 50 volt and the DC/DC converter of the module 2.3 then ensures that the about 400 volt from the bus is converted to 50 volt for the benefit of the supercap.

When further, with the aid of the windmill 10, energy is generated in that the mill rotates, in this example, the windmill 10 also generates a voltage of 100 volt DC voltage. The local control device 26 of the module 2.5 detects the fact that the windmill 10 generates energy and will pass this on to the control device 20 via the line 22. To this end, the control device 20 can control the module 2.5 so that the electric energy delivered by the windmill 10 is also supplied to the bus 2. In this example, the module 2.5 is also provided with a DC/DC converter in order to convert the 100 volt DC voltage to about 400 volt DC voltage on the connection 4 of the module 2.5. Because the module 2.3 had already been activated, this electric energy will also be stored in the supercap 16. Thus, locally generated energy can be stored in the supercap 16.

When the local control device 26 of the module 2.2 detects that energy is drawn by the local AC grid, this in fact means that the local AC grid draws energy from the bus 2 via the module 2.2. The local control device 26 of the module 2.2 can communicate this to the control device 20 via the line 22. The control device 20 can then, for instance, control the module 2.3 such that it takes up energy from the bus and stores it in the supercap as long as the power supplied to the bus via the modules 2.5 and 2.5 is greater than the power drawn via the module 2.2. The surplus of supply of the power is then stored in the supercap 16 via the module 2.3. If, conversely, the demand for power drawn via the module 2.2 exceeds the supply of power supplied to the bus via the module 2.4 and 2.5, the control device 20 can control the module 2.3 such that it will supply power to from the supercap 16 the bus in order to meet the demand.

It is also possible for the control device 20 to control the module 2.1 such that the bus 2 draws power from the public electricity grid 14. This power may then, for instance, be supplied to the local AC grid 12 via the module 2.2. This may, for instance, take place when the power which can be delivered to the bus 2 by the supercap 16, solar cell 8 and windmill 10 in combination is not sufficient to meet the demand for power of the local AC grid 12. Further, a user 24 can input specific instructions in the control device 20 regarding the control, more in particular regarding activation or deactivation of particular modules. Thus, the computer 24 may, for instance, further be coupled with the Internet 26 via which online information is downloaded about prices of electric energy. If a user establishes that the electric energy is inexpensive, he can decide to control the modules such that, for instance, the energy generated using the solar cell and the windmill is stored in the supercap 16. He can also bring about that the energy demanded by the local AC grid 12 is in fact drawn from the public electricity grid 14 since the energy price is low at this moment. Thus, for instance, the second module 2.2 can supply information to the control device 20 via the line 22 about the power drawn by the local AC grid 12. Further, via the line 22, the control device 20 can receive information about how much power is delivered by the solar cell and the windmill. The control device 20 can then bring about that the power is drawn by the local grid 12 via the module 2.2 from the electricity grid via the module 2.1 and that the delivered power of the solar cell and the windmill together corresponds with the power supplied to the supercap 16 via the module 2.3.

When, after a while, it appears that the energy prices have risen again, a user 24 may, for instance, bring about that energy stored in the supercap 16 is supplied to the public electricity grid via the module 2.3 and the module 2.1 so that the user gets a relatively higher price back for the energy he stored earlier. In this manner, a user can trade in energy. Here, it is even conceivable that a user decides to buy energy relatively inexpensively via the modules 2.1 and 2.3 and to store it in the supercap 16. Later, when the energy prices have risen, he can decide to supply the energy stored in the supercap 16 to the public electricity grid 14 again whereby he in fact sells this energy at a higher price. Such variants are each considered to fall within the framework of the invention.

Because the system is arranged such that the modules operatively generate a predetermined voltage on the bus, the configuration of the system can be changed in a simple manner by adding or removing modules. Thus, the system has become a particularly flexible system. In this example, it holds that the modules themselves bring about, in combination, that the predetermined voltage is operatively generated on the bus.

In this example, it holds that, to this end, the first type of module (here the modules 2.4 and 2.5) is arranged such that, upon supplying energy to the bus while the voltage on the bus is smaller than at least one predetermined first voltage value, the power of the supply of energy is released to be raised until the voltage on the bus has increased to a predetermined first voltage value or until the power of the supply of energy to the bus has increased to a predetermined first power value and that, upon supplying the energy to the bus while the voltage on the bus is greater than the predetermined first value, the power of the energy supplied to the bus is reduced until the voltage on the bus has decreased to the predetermined first voltage value. More in particular, it holds for the modules 2.4 and 2.5 that they are arranged such that, upon supplying energy to the bus while the voltage on the bus is smaller than at least one predetermined first voltage value, the power of the supply of energy is raised until the voltage on the bus has increased to a predetermined first voltage value or until the power of the supply of energy to the bus has increased to a predetermined first power value and that, upon supplying the energy to the bus while the voltage on the bus is greater than the predetermined first value, the power of the energy supplied to the bus is reduced until the voltage on the bus has decreased to the predetermined first voltage value. The underlying idea is that a greatest possible part of the power offered by the windmill 10 and/or solar cell 8 needs to be supplied to the bus to be used or stored elsewhere.

It further holds for the module 2.2, i.e. for a second type of module, that it is arranged such that, upon drawing energy from the bus while the voltage on the bus is greater than at least one second predetermined voltage value, the power of the drawing of energy from the bus is released to be raised until the voltage on the bus has decreased to a predetermined second voltage value or until the power of the drawing of the energy from the bus has increased to a predetermined second power value and that, upon drawing energy from the bus while the voltage on the bus is smaller than the predetermined second voltage value, the power drawn from the bus is reduced until the voltage on the bus has increased to the predetermined second voltage value. If, when the voltage on the bus is greater than the predetermined second voltage value, the demand from the local grid 12 for power increases or decreases, the second module 2.2 will thus follow this until, with an increasing demand for the power, the voltage on the bus has decreased to the predetermined second voltage value or until the power of the drawing of the energy from the bus has increased to the predetermined second power value.

It holds for the modules 2.1 and 2.3 which are a third type of module in this example, that they are arranged such that they act as a first type of module upon supplying energy to the bus and as a second type of module upon drawing energy from the bus. For each of the modules 2.1 and 2.3, it holds that they are arranged such that, when they act as a second type of module, upon drawing energy from the bus while the voltage on the bus is greater than the at least one predetermined second voltage value, the power of the drawing of energy from the bus is released to be raised until the voltage on the bus has decreased to a predetermined second voltage value or until the power of the drawing of the energy from the bus has increased to a predetermined second power value and that, upon drawing the energy from the bus while the voltage on the bus is smaller than the predetermined second voltage, the power drawn from the bus is reduced until the voltage on the bus has increased to the predetermined second voltage value. More in particular, it holds that, when the voltage on the bus is greater than the predetermined second voltage value, the power supplied to the apparatus (in this example the supercap 16 or the public electricity grid 14) will increase until the voltage on the bus has decreased to a predetermined second voltage value or until the power of the drawing of the energy from the bus has increased to a predetermined second power value. The underlying idea is that as much of the available power on the bus as possible needs to be stored in the supercap and/or supplied to the public electricity grid 14.

For each of the modules 2.1 and 2.3, it holds that it is arranged such that, upon supplying energy to the bus while the voltage on the bus is smaller than at least one predetermined first voltage value, the power of the supply of energy is released to be raised until the voltage on the bus has increased to a predetermined first voltage value or until the power of the supply of energy to the bus has increased to a predetermined first power value and that, upon supplying energy to the bus while the voltage on the bus is greater than the predetermined first value, the power of the energy supplied to the bus is reduced until the voltage on the bus has decreased to the predetermined first voltage value.

More in particular, it holds for the modules 2.1 and 2.3 when they act as a first type of module that, upon supplying energy to the bus while the voltage on the bus is smaller than at least one predetermined first voltage value, the power of the supply of energy is released to be raised until the voltage on the bus has increased to a predetermined first voltage value or until the power of the supply of energy to the bus has increased to a predetermined first power value and that, upon supplying the energy to the bus while the voltage on the bus is greater than at least the predetermined first value, the power of the energy supplied to the bus is reduced until the voltage on the bus has decreased to the predetermined first voltage value. The underlying idea is that the power which is demanded via the bus 2 by the supercap 16 and/or which is delivered to the grid, i.e. that the delivery of power to the bus, follows the demand.

The first and the second power values may, for instance, be inputted in the respective modules by the control device 20. The input of the predetermined first power values may, for instance, take place in response to information received from the local control devices 26 regarding powers to be delivered to the bus by the apparatuses 8, 10, 14 and 16. The first power values may, for instance, be inputted in the respective modules by the control device depending on the power to be delivered maximally by the apparatuses 8, 10, 14 and 16, respectively. The input of the predetermined second power values may, for instance, take place in response to information received from the local control devices 26 regarding powers to be drawn from the bus by the apparatuses 12, 14 and 16. The second power values may, for instance, be inputted by the control device depending on the power to be taken up maximally by the apparatuses 12, 14 and 16, respectively.

In this example, the first and second voltage value (so-called set points) can be inputted by the control device in the respective modules. In this example, it holds that a voltage value of a module which supplies energy to the bus is greater than the voltage value of a module which draws energy from the bus. So, it holds in this example that the first voltage values are greater than the second voltage values.

It further holds, for instance, that the first voltage values of the modules 2.4 and 2.5 are each greater than the first voltage value of the module 2.3 if the module 2.3 has been activated for supplying energy to the bus 2, while, for instance, in addition, it holds that the first voltage values of the modules 2.4 and 2.5 are equal to one another. The effect thereof will be that, when, for instance, energy is drawn from the bus via the second module 2.2 (to this end, second module 2.2 comprises a second voltage value which is greater than each of the first voltage values), as long as the solar cell 8 and the windmill 10 can deliver the respective demanded power, the voltage on the bus decreases and thus becomes equal to the first voltage value of the modules 2.4 and 2.5. If the power delivered by the solar cell 8 and the windmill 10 is not sufficient to cover the demand of the local grid 12, the voltage on the bus 2 will decrease further. Then, the power delivered by the solar cell has reached the predetermined first power value of the module 2.4 and the power delivered by the windmill 10 has reached the predetermined first power value of the second module 2.5 (which may differ from the predetermined first power value of the module 2.4). As long as the voltage on the bus 2 is greater than the first voltage value of the module 2.3, no power will be supplied from the supercap 16 to the bus 2 via the module 2.3. However, as soon as the voltage on the bus 2 decreases to below the first voltage value of the module 2.3, the supercap 16 will also supply energy to the module 2 in order to be able to meet, together with the energy from the solar cell and the windmill, the energy demand of the local grid 12.

If, however, the module 2.3 is used for storing energy in the supercap 16, it holds that it is arranged such that, upon drawing energy from the bus while the voltage on the bus is greater than at least one second predetermined voltage value, the power of the drawing of the energy from the bus is raised until the voltage on the bus has decreased to the predetermined second voltage value or until the power of the drawing of the energy from the bus has increased to a predetermined second power value and that, upon drawing energy from the bus while the voltage on the bus is smaller than the predetermined second voltage value, the power drawn from the bus is reduced until the voltage on the bus has decreased to the predetermined second voltage value.

It will be clear that an effect is that the voltage on the bus 2 is in the voltage interval formed, in this example, by a greatest first voltage value used and a smallest second voltage value used.

Of course, the second voltage value of the module 2.1 may be different from the second voltage value of the module 2.2. All this can be inputted in the respective modules by the control device 20 depending on the wish of whereto a supply of power on the bus 2 is to be supplied initially and whereto then a surplus of power is to be supplied after that. If the power is initially to be supplied to the local grid 12 and then, only in case of a surplus, to the electricity grid 14, then it will hold that the second voltage value of the module 2.2 is lower than the second voltage value of the module 2.1.

The module 2.3 may act as a charging module for charging the supercap, as described hereinabove. The module 2.3 then regulates the power to the supercap such that a second voltage value is built up on the bus. If no external mains voltage of the grid (14) is present, the module 2.2 for the local grid will use a very low set point (second predetermined value) for the bus voltage. Thus, 16, 8 and 10 can switch from charging to delivering. It is thus achieved that, always, maximum energy is available to all modules. For instance for an AC grid module: if the voltage should drop below a predetermined set point, the module will switch off. The predetermined voltage values (set points) determine the operation of modules. Another example is that 2.3 has a set point for charging (second voltage value) with a different set point (first voltage value) for delivering. The predetermined voltage value of the module 2.2 can be very low so that, in practice, this voltage value is not reached on the bus. The module 2.2 thus meets the power need of the local AC grid.

Such variants are each considered to fall within the framework of the invention.

The invention is by no means limited to the above-described embodiments. Thus, the control signals from the control device 20 may also be supplied to the various modules via a line 30. Then the line 22 can be omitted. It is further conceivable that the control device 20 and the module 2.1 are combined to a master module 32, the idea being that such a master module will always be needed in a system according to the invention. Also, the control device 20, the module 2.1 and the module 2.2 may be combined in a master module 34 on the basis of similar considerations.

In this example, the voltage 2 on the bus is completely determined by the set points, i.e. by the first voltage values and the second voltage values of the modules. So, the modules themselves determine the respective voltage. In other words, the modules are, in combination, arranged such that the predetermined voltage is operatively generated on the bus or, in this example, the modules are, in combination, arranged such that a voltage is received on the bus which is within the above-mentioned predetermined voltage interval. It is of course also possible for the apparatus to be provided with a second control device 40 which is, on the one hand, again connected with the various modules via the line 22 and, on the other hand, connected with the bus 2 via a line 32. The second control device 40 measures the actual voltage on the bus 2 and then controls the modules 2.1 - 2.5 such that the voltage on the bus has at least one predetermined value or is within the predetermined voltage interval. The control of the modules may be completely analog as discussed with reference to the set points. The control may also be digital. What it then in fact comes down to is that each of the set points is included in the second control device 40 and that, by a comparison of the set point associated with a particular module and the current voltage on the bus 2, the respective module is controlled for the operation as discussed hereinabove with reference to the respective set points. Also, the above-mentioned predetermined first and second power values may be included in the respective second control device, while the second control device receives information via the line 22 about the powers currently supplied to the bus or drawn from the bus by the respective modules, compares these powers with the above-mentioned predetermined power values and controls the modules such that they operate in the same manner as discussed hereinabove. Also, the supercap 16 and the module 2.3 may be combined as a unit which then in fact comprises a charging device. It is also conceivable that a third type of module is connected with a first type of apparatus. The third type of module then only acts as a first type of module and is thus referred to as a first type of module according to the invention. It is also conceivable that a third type of module is connected with a second type of apparatus. The third type of module then only acts as a second type of module and is thus referred to as a second type of module according to the invention. Likewise, a third type of apparatus may be connected with a first type of module, while the third type of apparatus only acts as a first type of apparatus. The third type of apparatus is thus referred to as a first type of apparatus according to the invention. Also, a third type of apparatus may be connected with a second type of apparatus. The third type of apparatus then only acts as a second type of apparatus. The third type of apparatus is thus referred to as a second type of apparatus according to the invention.

The apparatuses 8, 10 may also be arranged such that they generate an AC voltage. The modules 2.4 and 2.5 are then each provided with an AC/DC converter.

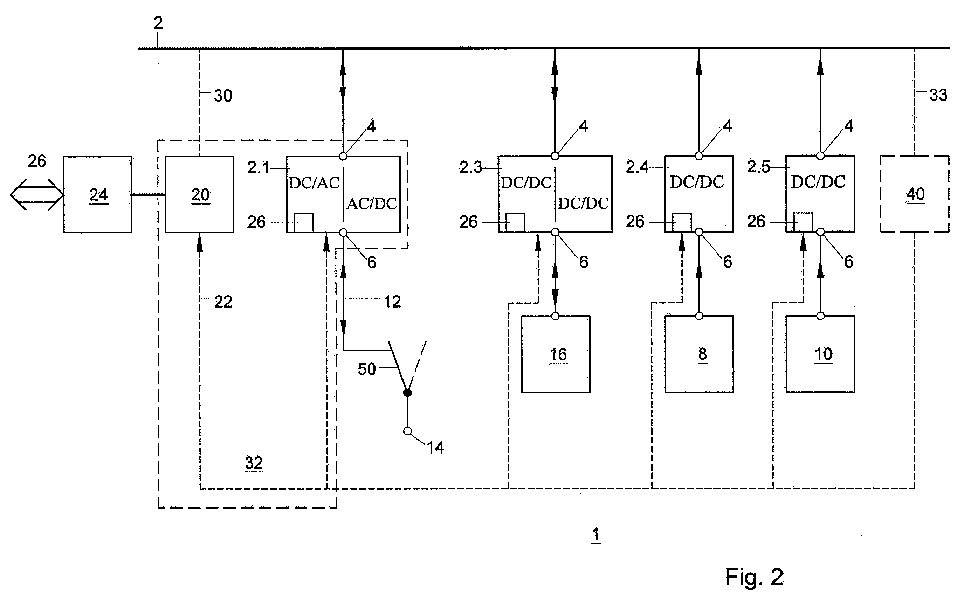

Fig. 2 shows a second embodiment of a system according to the invention. Here, parts corresponding with Fig. 1 are designated by the same reference numerals as in Fig. 1. In the system of Fig. 2, it holds that the public electricity grid is connected or not connected, as desired, with the second connection 6 of the module 1.2 via switch 50. The local AC grid 12 is permanently connected with the second connection. The position of the switch 50 may, for instance, be determined by the module 2.1. The module 2.1 may, for instance, close the switch 50 when the power drawn by the local AC grid from the bus 2 via the module 2.1 increases to a predetermined second power value. The system may also supply energy to the public electricity grid 14 via the module when the switch 50 is closed.

Further, hereinabove a system is described which uses positive DC voltages on the bus. According to the invention, all voltage values can change signs. The voltage on the bus will then be negative. The values of the predetermined first, second and third voltage value will also change signs. However, the result of this is that:
- the first type of module, if present, is arranged such that, upon supplying energy to the bus while the voltage on the bus is greater than at least one predetermined first voltage value, the power of the supply of energy is released to be raised until the voltage on the bus has decreased to a predetermined first voltage value or until the power of the supply of energy to the bus has increased to a predetermined first power value and that, upon supplying the energy to the bus while the voltage on the bus is smaller than the predetermined first value, the power of the energy supplied to the bus is reduced until the voltage on the bus has increased to the predetermined first voltage value;
- the second type of module, if present, is arranged such that, upon drawing energy from the bus while the voltage on the bus is smaller than at least one second predetermined voltage value, the power of the drawing of energy from the bus is released to be raised until the voltage on the bus has increased to the predetermined second voltage value or until the power of the drawing of energy from the bus has increased to a predetermined second power value and that, upon drawing energy from the bus while the voltage on the bus is greater than the predetermined second voltage value, the power drawn from the bus is reduced until the voltage on the bus has decreased to a predetermined second voltage value;
- the third type of module, if present, is arranged such that it acts as a first type of module upon supplying energy to the bus and as a second type of module upon drawing energy from the bus;
- the first voltage value is smaller than the second voltage value. Such variants are each considered to fall within the framework of the invention.

## Claims

1. A modular bidirectional bus system for exchanging energy between modules, provided with at least a bus and a plurality of exchangeable modules which are detachably connected with the bus for mutually exchanging electric energy between the modules via the bus, wherein the system is provided with at least two different modules of the following types:
- a first type of module with at least one first connection which is operatively electrically connected with the bus for supplying energy to the bus via the first connection of the first type of module and at least one second connection which is operatively connected with a first type of apparatus for drawing energy from the first type of apparatus via the second connection of the first type of module;
- a second type of module with at least one first connection which is operatively electrically connected with the bus for drawing energy from the bus via the first connection of the second type of module and with at least one second connection which is operatively connected with a second type of apparatus for supplying energy to the second type of apparatus via the second connection of the second type of module;
- a third type of module with at least one first connection which is operatively electrically connected with the bus and a second connection which is operatively connected with a third type of apparatus for, as desired, supplying energy to the bus via the first connection of the third type of module and drawing energy from the third type of apparatus via the second connection of the third type of module or drawing energy from the bus via the first connection of the third type of module and supplying energy to the third type of apparatus via the second connection of the third type of module, wherein the system is arranged such that the modules operatively generate a predetermined voltage on the bus.

2. A system according to claim 1, **characterized in that** the system is arranged such that the modules operatively generate a voltage on the bus which is within a predetermined voltage interval.

3. A system according to claim 1 or 2, **characterized in that** the modules are, in combination, arranged such that the predetermined voltage is operatively generated on the bus.

4. A system according to claim 3, **characterized in that** the modules are, in combination, arranged such that a voltage is operatively received on the bus which is within a predetermined voltage interval.

5. A system according to any one of the preceding claims, **characterized in that**:
- the first type of module, if present, is arranged such that, upon supplying energy to the bus while the voltage on the bus is smaller than at least one predetermined first voltage value, the power of the supply of energy to the bus is released to be raised until the voltage on the bus has increased to the predetermined first voltage value or until the power of the supply of energy to the bus has increased to a predetermined first power value and that, upon supplying the energy to the bus while the voltage on the bus is greater than the predetermined first value, the power of the energy supplied to the bus is reduced until the voltage on the bus has decreased to the predetermined first voltage value;
- the second type of module, if present, is arranged such that, upon drawing energy from the bus while the voltage on the bus is greater than at least one second predetermined voltage value, the power of the drawing of energy from the bus is released to be raised until the voltage on the bus has decreased to the predetermined second voltage value or until the power of the drawing of energy from the bus has increased to a predetermined second power value and that, upon drawing energy from the bus while the voltage on the bus is smaller than the predetermined second voltage value, the power drawn from the bus is reduced until the voltage on the bus has increased to the predetermined second voltage value;
- the third type of module, if present, is arranged such that it acts as a first type of module upon supplying energy to the bus and as a second type of module upon drawing energy from the bus;
- the first voltage value is greater than the second voltage value.

6. A system according to any one of claims 1-4, **characterized in that**:
- the first type of module, if present, is arranged such that, upon supplying energy to the bus while the voltage on the bus is greater than at least one predetermined first voltage value, the power of the supply of energy is released to be raised until the voltage on the bus has decreased to the predetermined first voltage value or until the power of the supply of energy to the bus has increased to a predetermined first power value and that, upon supplying energy to the bus while the voltage on the bus is smaller than the predetermined first value, the power of the energy supplied to the bus is reduced until the voltage on the bus has increased to the predetermined first voltage value;
- the second type of module, if present, is arranged such that, upon drawing energy from the bus while the voltage on the bus is smaller than at least one second predetermined voltage value, the power of the drawing of energy from the bus is released to be raised until the voltage on the bus has increased to the predetermined second voltage value or until the power of the drawing of the energy from the bus has increased to a predetermined second power value and that, upon drawing energy from the bus while the voltage on the bus is greater than the predetermined second voltage value, the power drawn from the bus is reduced until the voltage on the bus has decreased to the predetermined second voltage value;
- the third type of module, if present, is arranged such that it acts as a first type of module upon supplying energy to the bus and as a second type of module upon drawing energy from the bus;
the first voltage value is smaller than the second voltage value.

7. A system according to any one of the preceding claims, **characterized in that** a first type of apparatus is an apparatus for delivering, more in particular for generating electric energy.

8. A system according to claim 7, **characterized in that** the first type of apparatus comprises a public electricity grid, windmill, fuel cell and/or solar cell.

9. A system according to any one of the preceding claims, **characterized in that** at least one module of the first type is arranged for drawing energy from an energy-generating system such as a windmill, fuel cell or solar cell.

10. A system according to any one of the preceding claims, **characterized in that** at least one module of the first type is arranged for drawing energy from a public electricity grid.

11. A system according to any one of the preceding claims, **characterized in that** a second connection of at least one module of the first type is operatively connected with a first type of apparatus in the form of a public electricity grid.

12. A system according to any one of the preceding claims, **characterized in that** a second connection of at least one module of the first type is operatively connected with a first type of apparatus in the form of an energy-generating system such as a windmill, fuel cell or solar cell.

13. A system according to any one of the preceding claims, **characterized in that** a second type of apparatus is an apparatus for drawing, more in particular for storing or using energy.

14. A system according to claim 13, **characterized in that** the second type of apparatus comprises a local electricity grid of a building or house.

15. A system according to any one of the preceding claims, **characterized in that** at least one module of the second type of module is arranged for delivering energy to a local AC electricity grid of a building or house.

16. A system according to any one of the preceding claims, **characterized in that** a second connection of at least one module of the second type is operatively connected with a second type of apparatus in the form of a local AC electricity grid of a building or house.

17. A system according to any one of the preceding claims, **characterized in that** a third type of module is a combination of a first and second type of module.

18. A system according to any one of the preceding claims, **characterized in that** a third type of apparatus comprises an energy storage and energy delivery system such as a public electricity grid, a battery or a supercap.

19. A system according to any one of the preceding claims, **characterized in that** at least one module of the third type is arranged for being connected with a public electricity grid, a battery or a supercap.

20. A system according to any one of the preceding claims, **characterized in that** a second connection of at least one first module of the third type is operatively connected with a third type of apparatus in the form of a public electricity grid.

21. A system according to any one of the preceding claims, **characterized in that** a second connection of at least one second module of the third type is operatively connected with a third type of apparatus in the form of an energy storage and energy delivery system such as a battery or a supercap.

22. A system according to any one of the preceding claims, **characterized in that** the voltage on the bus is a DC voltage.

23. A system according to claim 22, **characterized in that** at least one first type of module comprises an AC/DC converter or a DC/DC converter.

24. A system according to claim 22 or 23, **characterized in that** at least one second type of module comprises a DC/AC converter or a DC/DC converter.

25. A system according to any one of claims 22-25, **characterized in that** at least one third type of module comprises an AC/DC converter and a DC/AC converter.

26. A system according to any one of claims 22-26, **characterized in that** at least one third type of module comprises at least a DC/DC converter.

27. A system according to any one of the preceding claims, **characterized in that** the system is further provided with a first control device which can activate or deactivate at least one first type of module for delivering energy via the first connection and taking up energy via the second connection and/or can activate or deactivate at least one second type of module for taking up energy via the first connection and delivering energy via the second connection and/or can activate or deactivate at least one third type of module for, as desired: - delivering energy via the first connection and taking up energy via the second connection; or: - taking up energy via the first connection and delivering energy via the second connection.

28. A system according to claim 5 or 6 and according to claim 27, **characterized in that** the first control device is arranged for inputting the first predetermined voltage value in a first type of module and/or inputting the second predetermined voltage value in a second type of module and/or inputting the first predetermined voltage value and/or inputting the second predetermined voltage value in a third type of module.

29. A system according to claim 5, 6 or 28, **characterized in that** the first control device is arranged for inputting the first predetermined power value in a first type of module and/or inputting the second predetermined power value in a second type of module and/or inputting the first predetermined power value and/or the second predetermined power value in a third type of module.

30. A system according to claim 28 or 29, **characterized in that** the first control device and a control module of the second type which is operatively connected with a public electricity grid are integrated with one another in one module.

31. A system according to claim 1 or 2, **characterized in that** the system is further provided with a second control system which controls the modules such that the modules generate a voltage on the bus with at least one predetermined value.

32. A system according to claims 2 and 31, **characterized in that** the second control device 40 controls the modules such that the modules operatively generate a voltage on the bus which is within the predetermined voltage interval.
